# EUROPEAN PATENT SPECIFICATION

(11) **EP 4 055 285 B1**
(45) Date of publication and mention of the grant of the patent: **18.09.2024**
(21) Application number: 19951503.2
(22) Date of filing: 06.11.2019
(51) Int. Cl.: F16B 5/04, F16B 19/05

(54) **MULTI-PIECE FASTENERS, FASTENING COLLAR INSTALLATION APPARATUS, AND METHODS OF FASTENING**
MEHRTEILIGE BEFESTIGUNGSELEMENTE, BEFESTIGUNGSSCHELLE UND VERFAHREN ZUM BEFESTIGEN
ATTACHES EN PLUSIEURS PIÈCES, APPAREIL D'INSTALLATION DE COLLIER DE FIXATION ET PROCÉDÉS DE FIXATION

(43) Date of publication of application: 14.09.2022
(73) Proprietor: Howmet Aerospace Inc., Pittsburgh, PA 15212-5858 (US)
(72) Inventor: WILCOX, Robert, B., McGregor, TX 76657 (US); KINGSBURY, Thomas, R., Hewitt, TX 76643 (US)
(74) Representative: Forresters IP LLP
(86) International application number: PCT/US2019/060082
(87) International publication number: WO 2021/091553

(56) References cited:
- WO-A1-86/06448
- JP-A- 2011 017 443
- US-A- 5 049 016
- US-A- 5 620 287
- US-A1- 2018 119 718
- No further relevant documents disclosed

## Description

### FIELD OF USE

The present disclosure relates to multi-piece fasteners, fastening collar installation apparatus, and methods of fastening.

### BACKGROUND

Vehicle frames, storage racks, solar panel sub-structures, aircraft parts, and other structures can include numerous mechanical fasteners. For example, a structural fastener can be installed in a bore of a structural component to secure parts together. Properly installing a structural fastener into a bore presents challenges.
US 5049016 A discloses a swage type fastener including a pin and a collar adapted to be swaged onto the pin by the application of a relative axial force by an installation tool.

### SUMMARY

According to one aspect of the present disclosure, a multi-piece fastener is provided. The multi-piece fastener comprises a fastening collar and a pin. The fastening collar comprises a first collar end, a second collar end, and a collar cavity. The collar cavity extends from the first collar end to the second collar end. The pin is configured to be at least partially received by the collar cavity. The pin comprises a first pin end comprising a head portion, a second pin end comprising a pull region, and a shank. The pull region is generally cylindrical and smooth and is configured to form at least one of an annular shoulder, a groove, a thread, and other feature thereon responsive to forcible contact from a fastening collar installation apparatus. The shank extends intermediate the first pin end and the second pin end. The fastening collar is configured to be deformed onto at least a region of the shank.

According to another aspect of the present disclosure, a fastening collar installation apparatus is provided. The fastening collar installation apparatus comprises a housing, an anvil, and a collet. The housing comprises a first housing end, a second housing end, and a housing cavity extending from the first housing end to the second housing end. The anvil and the collet are positioned within the housing cavity. The collet comprises a first collet end adjacent to the anvil. The first collet end comprises jaws configured to forcibly contact at least a portion of a pull region of a multi-piece fastener and to form at least one of an annular shoulder, a groove, a thread, and other feature on the pull region.

According to yet another aspect of the present disclosure, a method for fastening is provided. The method comprises inserting a second pin end of a pin of a multi-piece fastener into a bore in a structure. The multi-piece fastener comprises a fastening collar and the pin. The fastening collar comprises a first collar end, a second collar end, and a collar cavity. The collar cavity extends from the first collar end to the second collar end. The pin is configured to be at least partially received by the collar cavity. The pin comprises a first pin end comprising a head portion, a second pin end comprising a pull region, and a shank. The pull region is generally cylindrical and smooth and is configured to form at least one of an annular shoulder, a groove, a thread, and other feature responsive to forcible contact from a fastening collar installation apparatus. The shank extends intermediate the first pin end and the second pin end. The fastening collar is configured to be deformed onto the shank. Additionally, the method comprises passing at least a portion of the second pin end through the collar cavity. The pull region of the pin is forcibly contacted with jaws of a collet of a fastening collar installation apparatus, and at least one of an annular shoulder, a groove, a thread, and other feature is formed on the pull region by the jaws. The fastening collar is forcibly contacted with an anvil of the fastening collar installation apparatus, and the pull region is moved distal from the fastening collar utilizing the collet of the fastening collar installation apparatus, thereby deforming the fastening collar onto the shank of the pin and securing at least a portion of the multi-piece fastener in the structure.

It will be understood that the invention disclosed and described in this specification is not limited to the aspects summarized in this Summary. The reader will appreciate the foregoing details, as well as others, upon considering the following detailed description of various non-limiting and non-exhaustive aspects according to this specification.

### BRIEF DESCRIPTION OF THE DRAWINGS

The features and advantages of the examples presented herein, and the manner of attaining them, will become more apparent, and the examples will be better understood, by reference to the following description taken in conjunction with the accompanying drawings, wherein:
FIG. 1A is a perspective view of a non-limiting embodiment of a multi-piece fastener according to the present disclosure;
FIG. 1B is a cross-sectional side view of a non-limiting embodiment of the multi-piece fastener of FIG. 1A taken along line 1B-1B of FIG. 1A;
FIG. 2A is a perspective view of a non-limiting embodiment of a fastening collar installation apparatus according to the present disclosure;
FIG. 2B is a cross-sectional side view of a non-limiting embodiment of the fastening collar installation apparatus of FIG. 2A taken along line 2B-2B of FIG. 2A;
FIG. 3 is a detail view of a non-limiting embodiment of jaws of a collet of an installation apparatus according to the present disclosure, wherein the jaws comprise grooves;
FIG. 4 is a detail view of a non-limiting embodiment of jaws of a collet of an installation apparatus according to the present disclosure, wherein the jaws comprise helical threads;
FIG. 5A is a cross-sectional side view of a non-limiting embodiment of a multi-piece fastener system and a structure according to the present disclosure;
FIG. 5B is a cross-sectional side view of the multi-piece fastener of FIG. 5A engaged with a non-limiting embodiment of a fastening collar installation tool according to the present disclosure;
FIG. 5C is a cross-sectional side view of a non-limiting embodiment of the multi-piece fastener of FIG. 5B with the fastening collar at least partially deformed onto a shank of a pin of the multi-piece fastener;
FIG. 5D is a cross-sectional side view of a non-limiting embodiment of the multi-piece fastener of FIG. 5C installed into the structure; and
FIG. 6 is a flow chart of a non-limiting embodiment of a method for fastening according to the present disclosure.

Corresponding reference characters indicate corresponding parts throughout the several views. The exemplifications set out herein illustrate certain embodiments, in one form, and such exemplifications are not to be construed as limiting the scope of the appended claims in any manner.

### DETAILED DESCRIPTION OF NON-LIMITING EMBODIMENTS

Various embodiments are described and illustrated herein to provide an overall understanding of the structure, function, and use of the multi-piece fasteners , and methods of fastening. The various embodiments described and illustrated herein are non-limiting and non-exhaustive. Thus, the invention is not limited by the description of the various non-limiting and non-exhaustive embodiments disclosed herein. Rather, the invention is defined solely by the claims. The features and characteristics illustrated and/or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. The various embodiments disclosed and described in this specification can comprise, consist of, or consist essentially of the features and characteristics as variously described herein.

Any references herein to "various embodiments," "some embodiments," "one embodiment," "an embodiment," or like phrases mean that a particular feature, structure, or characteristic described in connection with the embodiment is included in at least one embodiment. Thus, appearances of the phrases "in various embodiments," "in some embodiments," "in one embodiment," "in an embodiment," or like phrases in the specification do not necessarily refer to the same embodiment. Furthermore, the particular described features, structures, or characteristics may be combined in any suitable manner in one or more embodiments. Thus, the particular features, structures, or characteristics illustrated or described in connection with one embodiment may be combined, in whole or in part, with the features, structures, or characteristics of one or more other embodiments without limitation. Such modifications and variations are intended to be included within the scope of the present embodiments.

In this specification, unless otherwise indicated, all numerical parameters are to be understood as being prefaced and modified in all instances by the term "about," in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

Any numerical range recited herein includes all sub-ranges subsumed within the recited range. For example, a range of "1 to 10" includes all sub-ranges between (and including) the recited minimum value of 1 and the recited maximum value of 10, that is, having a minimum value equal to or greater than 1 and a maximum value equal to or less than 10. Also, all ranges recited herein are inclusive of the end points of the recited ranges. For example, a range of "1 to 10" includes the end points 1 and 10. Any maximum numerical limitation recited in this specification is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited. All such ranges are inherently described in this specification.

The grammatical articles "a," "an," and "the," as used herein, are intended to include "at least one" or "one or more," unless otherwise indicated, even if "at least one" or "one or more" is expressly used in certain instances. Thus, the foregoing grammatical articles are used herein to refer to one or more than one (i.e., to "at least one") of the particular identified elements. Further, the use of a singular noun includes the plural, and the use of a plural noun includes the singular, unless the context of the usage requires otherwise.

As used herein, "intermediate" means that the referenced element is disposed between two elements but is not necessarily in contact with those elements. Accordingly, unless stated otherwise herein, an element that is "intermediate" a first element and a second element may or may not be adjacent to or in contact with the first and/or second elements, and other elements may be disposed between the intermediate element and the first and/or second elements.

Installing a lockbolt can comprise axially moving the pin of the fastener distal from a fastening collar of the fastener system and swaging the fastening collar. Moving the pin can require a collet of an installation tool to engage or otherwise grip the pin. Typically, the pin can comprise a pull section with a gripping feature that can be engaged by the collet, such as, for example, an annular shoulder, a groove, a thread, or other feature . The gripping feature can be difficult to form during a rolling procedure. Additionally, forming the gripping feature on the pull section of the pin adds time and cost to the manufacturing process. Accordingly, multi-piece fasteners, fastening collar installation apparatus, and methods of fastening are provided that may not require a gripping feature to be provided on a pull region of a pin of the multi-piece fastener.

Additionally, the multi-piece fasteners, fastening collar installation apparatus, and methods of fastening according to the present disclosure can provide a visual indication that the fastener has been installed, which can save inspection time.

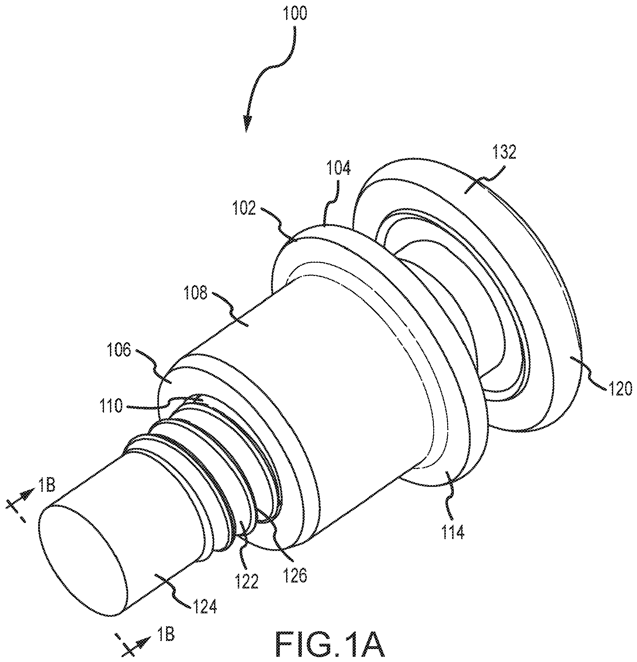

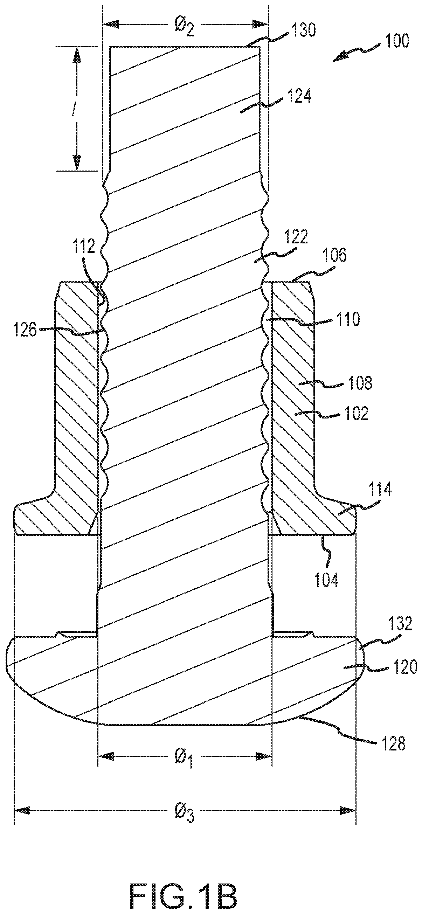

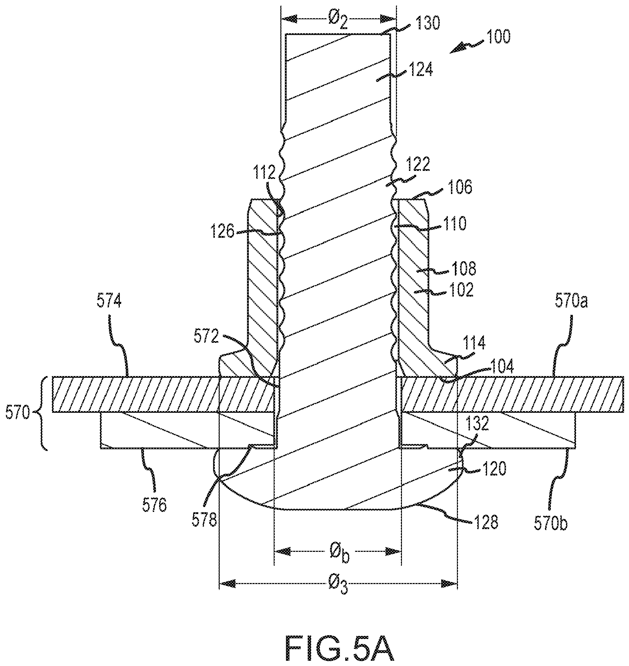

FIGs. 1A-1B illustrate a non-limiting embodiment of a multi-piece fastener 100 according to the present disclosure. The multi-piece fastener 100 can be adapted to be installed in a bore in a structure (e.g., as illustrated in FIGs. 5A-5D and discussed below). The multi-piece fastener 100 can comprise at least two components, such as, for example, a fastening collar 102 and a pin 120 as illustrated in FIGs. 1A-1B, or in some non-limiting embodiments, at least three components (not shown). In various non-limiting embodiments, the multi-piece fastener 100 can comprise a two-piece assembly, including the fastening collar 102 and the pin 120. In some non-limiting embodiments, the multi-piece fastener 100 can comprise a lockbolt. For example, the lockbolt can be a structural lockbolt fastener, such as, for example, a structural rivet, a structural bolt, or a structural stud.

The fastening collar 102 can comprise a first collar end 104, a second collar end 106, an elongate portion 108 disposed intermediate the first collar end 104 and the second collar end 106, and a collar cavity 110 extending through the elongate portion 108 from the first collar end 104 to the second collar end 106. The elongate portion 108 can define a longitudinal axis of the fastening collar 102 and/or the multi-piece fastener 100. An inner surface 112 of the elongate portion 108 defining the collar cavity 110 can comprise at least one of a substantially cylindrical region, a threaded region, an annular shoulder, a groove, and other feature depending on the desired application. The fastening collar 102 can be sized and configured to engage with a fastening collar installation tool. Responsive to the engagement, the fastening collar 102 can be deformed onto a shank 122 of a pin 120 of the multi-piece fastener 100 to achieve a desired clamping force between the fastening collar 102 and the pin 120.

The pin 120 can comprise a first pin end 128, a second pin end 130, and the shank 122. The shank 122 can comprise a shape and size suitable to be received by the collar cavity 110 of the fastening collar 102, such as, for example, a generally cylindrical shape. The shank 122 can extend intermediate the first pin end 128 and the second pin end 130 and can be dimensioned so that it can be disposed at least partially through the collar cavity 110. When the shank 122 is inserted in the collar cavity 110, the second pin end 130 can be disposed adjacent to the second collar end 106, and the first pin end 128 can be disposed adjacent to the first collar end 104. The first pin end 128 can comprise a head portion 132 configured to inhibit the pin 120 from traversing completely through a bore in a structure. For example, a diameter of a bore in a structure can comprise a diameter less than a diameter of the head portion 132 so that the head portion 132 cannot pass through the bore.

The collar cavity 110 can be configured to receive the pin 120. For example, the collar cavity 110 can comprise a first diameter, Ø₁, greater than a second diameter, Ø₂, of the shank 122. The fastening collar 102 can comprise a flange 114 comprising a third diameter, Ø₃, sized and configured in order to inhibit the flange 114 of the fastening collar 102 from traversing through a bore in a structure. In various non-limiting embodiments, the fastening collar 102 can be generally cylindrical.

In various non-limiting embodiment, the second diameter, Ø₂, of the shank 122 can be at least 1.52 mm (0.06 inches), such as, for example, at least 2.54 mm (0.1 inch), at least 12.7 mm (0.5 inches), or at least 25.4 mm (1 inch). In various non-limiting embodiments, the second diameter, Ø₂, of the shank 122 can be no greater than 102 mm (4 inches), such as, for example, no greater than 25.4 mm (1 inch), no greater than 12.7 mm (0.5 inches), or no greater than 2.54 mm (0.1 inch). In various non-limiting embodiments, the second diameter, Ø₂, of the shank 122 can be in a range of 1.52 mm to 102 mm (0.06 inches to 4 inches), such as, for example, 1.52 mm to 25.4 mm (0.06 inches to 1 inches), or 1.52 mm to 12.7 mm (0.06 inches to 0.5 inches).

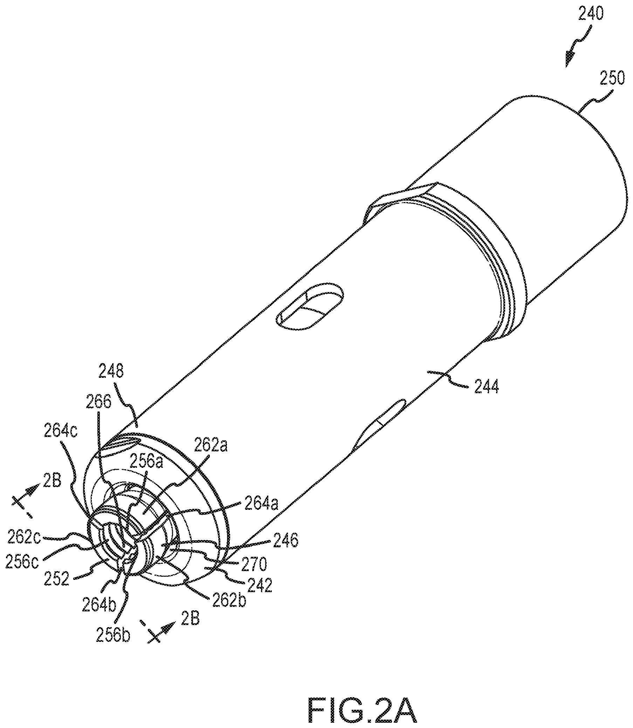

The second pin end 130 can comprise a pull region 124 configured to be engaged by a fastening collar installation apparatus (e.g., fastening collar installation apparatus 240, as illustrated in FIGs. 2A-2B and discussed below). The pull region 124 can comprise an axial length, *l*, sized to be engaged by an installation tool. For example, in various non-limiting embodiments, the axial length, *l*, can be at least 0.5 times the second diameter, Ø₂, of the shank 122, such as, for example, at least 1 times the second diameter, Ø₂, of the shank 122, at least 2 times the second diameter, Ø₂, of the shank 122, or at least 3 times the second diameter, Ø₂, of the shank 122. In various non-limiting embodiments, the axial length, *l*, can be no greater than 4 times the second diameter, Ø₂, of the shank 122, such as, for example, no greater than 3 times the second diameter, Ø₂, of the shank 122, no greater than 2 the second diameter, Ø₂, of the shank 122, or no greater than 1 times the second diameter, Ø₂, of the shank 122. In certain non-limiting embodiments, the axial length, *l*, can be in a range of 0.5 to 4 times the second diameter, Ø₂, of the shank 122, such as for example, 0.5 times to 2 times the second diameter, Ø₂, of the shank 122.

In certain non-limiting embodiments, the pull region 124 may not comprise a taper. In various other non-limiting embodiments, not in line with the claimed invention, the pull region 124 may comprise a taper or a reverse taper. For example, as one moves along the pull region 124 away from the shank 122 along a longitudinal axis of the pin 120, the diameter of the pull region 124 can decrease. In certain other non-limiting embodiments, the pull region 124 can comprise a reverse taper in which, as one moves along the pull region 124 away from the shank 122 along the longitudinal axis of the pin 120, the diameter of the pull region 124 can increase.

In certain non-limiting embodiments, according to the claimed invention, the pull region 124 is generally cylindrical and smooth. For example, the pull region 124 can be free of an annular shoulder, grooves, threads, or other features prior to forcible contact with a fastening collar installation apparatus. In various non-limiting embodiments, the annular shoulder, groove, thread, or other feature can form on the pull region 124 responsive to forcible contact with a fastening collar installation apparatus. The formation of the annular shoulder, groove, thread, and/or other feature on the pull region 124 can be responsive to installation of the multi-piece fastener 100 into a structure and, thus, provides a visual indication that the multi-piece fastener 100 has been installed into the structure.

The shank 122 can define the longitudinal axis of the pin 120 and/or the multi-piece fastener 100. The shank 122 can be configured to engage the fastening collar 102 on installation in order to secure the shank 122 to the fastening collar 102. In various non-limiting embodiments, upon engagement of the pin 120 and the collar 102 when the components are installed, the longitudinal axis of the pin 120 and the longitudinal axis of the fastening collar 102 can be substantially aligned and form the longitudinal axis of the multi-piece fastener 100.

In various non-limiting embodiments, the shank 122 of the pin 120 can comprise at least one of a generally smooth region, a threaded region, an annular shoulder, a groove, and other feature that is adapted to engage the surface 112 of the fastening collar 102 on installation. The threaded region, annular shoulder, groove, and/or other feature can be external relative to the shank 122. In various non-limiting embodiments, all or a portion of the shank 122 includes grooves. For example, as shown in FIGs. 1A-1B, the shank 122 of the pin 120 includes grooves 126. In other non-limiting embodiments, all or a portion of the shank 122 lacks grooves. In various non-limiting embodiments, a portion of the shank 122 includes an annular shoulder. In other non-limiting embodiments, the shank 122 lacks an annular shoulder. In various non-limiting embodiments, a portion of the shank 122 includes a threaded portion. In other non-limiting embodiments, the shank 122 lacks a threaded portion.

The collar cavity 110 of the fastening collar 102 can be configured to at least partially receive the shank 122 of the pin 120 therein. For example, the collar cavity 110 can comprise a shape suitable to receive the shank 122 of the pin 120, such as, for example, a generally cylindrical shape. During and/or after introduction of the shank 122 into the collar cavity 110, the fastening collar 102 can be at least partially deformed (e.g., swaged) onto the shank 122 responsive to forcible contact between the fastening collar 110 and a fastening collar installation apparatus, as described below. The deformation can secure the fastening collar 102 to the shank 122.

In various non-limiting embodiments, the pin 120 may not comprise a breakneck groove or other feature configured to fracture upon installation of the multi-piece fastener 100, and the pull region 124 may stay intact after installation. In various other non-limiting embodiments, the pin 120 may comprise a breakneck groove (not shown) or other feature configured to fracture upon installation of the multi-piece fastener 100. In certain other non-limiting embodiments, the pin 120 may not comprise a breakneck groove and may still be configured to fracture upon installation of the multi-piece fastener 100. Thus, according to various non-limiting embodiments, the multi-piece fastener 100 according to the present disclosure, may be installed into a structure without fracturing of a breakneck groove or other feature, or a breakneck groove or other feature may be provided and may be fractured upon installation of the multi-piece fastener into the structure.

The multi-piece fastener system according to the present disclosure can comprise at least one of a metal, a metal alloy, a composite material, and another suitable material. For example, in various non-limiting embodiments, the multi-piece fastener 100 can comprise at least one of aluminum, an aluminum alloy, titanium, a titanium alloy, nickel, a nickel alloy, iron, an iron alloy, and a carbon fiber composite material. In various non-limiting embodiments, the multi-piece fastener 100 comprises steel, such as, for example, stainless steel.

FIGs. 2A-B illustrate a non-limiting embodiment of fastening collar installation apparatus 240 according to the present disclosure. The fastening collar installation apparatus 240 can engage at least a portion of a fastener system (e.g., the pull region 124 of the pin 120 of the fastener system illustrated in FIGs. 1A-B) and/or deform a portion of the fastener system (e.g., deform the fastening collar 102 and/or break the pin 120 of the multi-piece fastener system 100 illustrated in FIGs. 1A-B). The fastening collar installation apparatus 240 can be configured with various components in order to engage a pin of the multi-piece fastener, deform the fastening collar onto the pin, and/or break the pin. For example, the fastening collar installation apparatus 240 can comprise an anvil 242, a housing 244, and a collet 246.

The housing 244 can be configured to receive and/or retain various components. For example, the housing 244 can comprise a housing cavity 268 extending along a longitudinal axis of the housing 244 from a first housing end 248 to the second housing end 250. In various non-limiting embodiments, the housing 244 can be substantially cylindrical. The housing cavity 268 can be configured to at least partially receive the collet 246.

The anvil 242 can be configured to engage and/or deform a fastening collar of a multi-piece fastener system (e.g., fastening collar 102 in FIGs. 1A-1B). For example, in various non-limiting embodiments, the anvil 242 can be operatively coupled to the housing 244 and positioned adjacent to the first housing end 248. In various non-limiting embodiments, the anvil 242 is in direct contact with the first housing end 248. The anvil 242 can comprise an anvil cavity 270 extending along a longitudinal axis of the anvil 242. The anvil cavity 270 can be configured to receive at least a portion of the multi-piece fastener 100, such as, for example, at least a portion of the fastening collar 102 and/or the pin 120. For example, in various non-limiting embodiments, the anvil 242 can have a toroidal shape.

The collet 246 can be sized and configured such that the collet 246 can engage and/or move at least a portion of a fastener system (e.g., the pull region 124 of the pin 120 of the multi-piece fastener 100). The collet 246 can be positioned within the housing cavity 268 of the housing 244 and configured to move relative to the housing 244 and/or anvil 242 in order to draw a multi-piece fastener 100 engaged with the collet 246 into contact with the anvil 242, as described below with reference to FIGs. 5A-5D.

In various non-limiting embodiments, the collet 246 can comprise a first collet end 252 adjacent to the anvil 242, a second collet end 254, a collet cavity 266 extending from the first collet end 252, and an elongate portion 258. The elongate portion 258 can comprise at least two fingers formed by at least two axial channels formed in the elongate portion 258. For example, the elongate portion 258 can comprise three fingers 262a-c formed by three axial channels 264a-c as illustrated in FIG. 2A. In certain non-limiting embodiments, the axial channels 264a-c can be substantially parallel to a longitudinal axis of the collet 246. In various non-limiting embodiments, the fingers 262a-c can be radially spaced about the longitudinal axis of the collet 246, and in various non-limiting embodiments, the fingers 262a-c can be substantially equally radially spaced about the longitudinal axis of the collet 246. Equally radially spacing the fingers 262a-c about the longitudinal axis of the collet 246 can facilitate centering of a fastening collar within the collet cavity 266 when the fastening collar installation apparatus 240 is in use.

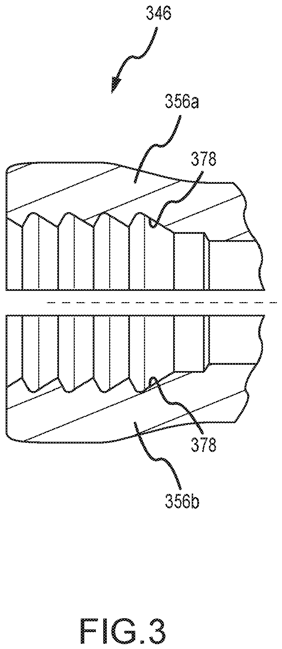

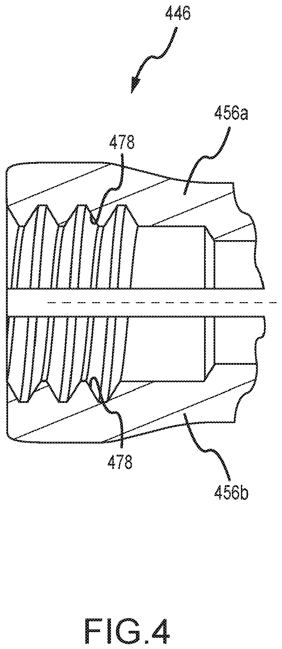

The first collet end 252 can comprise jaws to engage at least a portion of a fastener (e.g., the pull region 124). For example, in various non-limiting embodiments, each finger 262a-c can comprise a respective jaw 256a-c extending inwardly relative to the longitudinal axis of the collet 246 and the collet cavity 266. In various non-limiting embodiments, the jaws 256a-c can comprise an annular shoulder (not shown), a groove, a thread, and/or other feature (not shown). For example, referring to FIG. 3, a collet 346 is provided that comprises jaws 356a-b with grooves 378. As shown in the non-limiting embodiment illustrated in FIG. 4, a collet 446 is provided comprising jaws 456a-b including threads 478. In various non-limiting embodiments, the jaws 256a-c, 356a-b, and 456a-b can comprise a 30-degree/60-degree chuck draw.

Referring again to FIGs. 2A-B, the jaws 256a-c, according to the claimed invention, are configured to forcibly contact at least a portion of a pull region 124 of the pin 120 of a multi-piece fastener 100 and to form, for example, an annular shoulder, a groove, a thread, and/or other feature on the pull region 124. In various non-limiting embodiments, the jaws 256a-c can cold form an annular shoulder, a groove, a thread, and/or other feature onto the pull region 124 of the pin 120. The process of forming an annular shoulder, a groove, a thread, and/or other feature on the pull region 124 can increase the tensile strength and/or shear strength of the pin 120, which can increase the reliability of the multi-piece fastener 100 after installation. Additionally, forming the annular shoulder, groove, thread, and/or other feature on a generally cylindrical and smooth pull region 124 can increase the engagement between the collet 246 and the pin 120 compared to engagement between a collet and a pin pull region including a preformed annular shoulder, groove, thread, and/or other feature.

In various non-limiting embodiments, the fastening collar installation apparatus 240 may form a single annular shoulder, groove, thread, or other feature on the pull region 124 of the pin 120. In certain non-limiting embodiments, the fastening collar installation apparatus 240 may form at least two annular shoulders, grooves, threads and/or other features on the pull region 124 of the pin 120.

The collet 246 can be a single, continuous piece or can comprise multiple pieces. For example, the fingers 262a-c can be joined together by bonding or other techniques or can be formed from a single piece of material. In certain non-limiting embodiments, the fingers 262a-c can be independently moveable relative to one another and are not joined together.

The collet 246 can be independently moveable relative to the housing 244 and/or anvil 242. For example, after engagement with the pull region 124 of the multi-piece fastener 100, the collet 246, including the jaws 256a-c, can be configured to retract within the housing 244 and move the pull region 124 distal from the fastening collar 102 of the multi-piece fastener 100. The movement of the collet 246 can be responsive to a linear force acting on the collet.

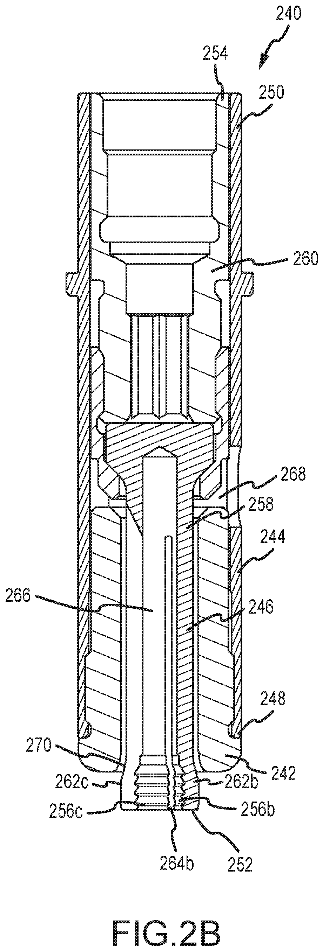

For example, in various non-limiting embodiments of the installation tool 240 the second collet end 254 can be configured to engage a tool that can generate a linear force, such as, for example, a piston of a powered installation tool. The powered installation tool can be a battery-powered tool, such as, for example, at least one of a Huck^{®} Range Force^{™} battery-powered installation tool; a pneumatic tool, such as, for example, a Huck^{®} 254 pneumatic tool; and a hydraulic tool, such as, for example, a Huck^{®} SF hydraulic tool, all available from Arconic Fasteners, Waco, Texas. In various non-limiting embodiments, as illustrated in FIG. 2B, the collet 246 can be engaged with an adapter 260 that can engage a tool that can generate a linear force.

The fastening collar installation apparatus 240 can comprise at least one of a metal, a metal alloy, a composite material, and another suitable material. For example, in various non-limiting embodiments, the fastening collar installation apparatus 240 can comprise at least one of aluminum, an aluminum alloy, titanium, a titanium alloy, nickel, a nickel alloy, iron, an iron alloy, and a carbon fiber composite material. In various non-limiting embodiments, the collet 246 can comprise a first material with a first hardness, and the pin 120 can comprises a second material with a second hardness. In certain non-limiting embodiments, the first hardness can be greater than the second hardness such that the collet 246 can deform the pull region 124 of first pin end 128 of the pin 120. Therefore, the jaws 256a-c can apply a force to a surface of the pull region 124 that is greater than a yield strength of the second material in order to form an annular shoulder, a groove, a thread, and /or other feature on the pull region 124.

As illustrated in FIGs. 5A-5D, the multi-piece fastener 100 can be installed into a bore 572 of a structure 570. As illustrated, the bore 572 can extend through the structure 570 from a first side 574 to a second side 576.

The structure 570 can comprise, for example, at least one of a metal, a metal alloy, a composite material, or another suitable material. For example, in certain non-limiting embodiments, the structure 570 can comprise at least one of aluminum, an aluminum alloy, titanium, a titanium alloy, nickel, a nickel alloy, iron, an iron alloy, and a carbon fiber composite material. In various non-limiting embodiments, the structure 570 into which the multi-piece fastener 100 is assembled comprises aluminum and/or an aluminum alloy, such as, for example, 7075 aluminum alloy. With reference to the accompanying figures, in various non-limiting embodiments the structure 570 can be configured as at least one of an aerospace component or structure, an automotive component or structure, a transportation component or structure, a building and construction component or structure, or another component or structure.

The structure 570 can comprise a single layer of material or at least two layers of material. For example, as illustrated in FIGs. 5A-5D, the structure 570 can comprise a first layer 570a and a second layer 570b. The first layer 570a can be intermediate the second layer 570b and the fastening collar 102 when the fastening collar 102 is installed. In various non-limiting embodiments, the first layer 570a is adjacent to the fastening collar 102.

The bore 572 can have a bore diameter, Ø_{b}. Additionally, to facilitate alignment of the multi-piece fastener 100 with the bore 572, the second diameter, Ø₂, of the shank 122 can be sized and configured to be less than the bore diameter, Ø_{b}, thereby allowing the second pin end 130 to be readily disposed into and through the bore 572. In various non-limiting embodiments, the bore diameter, Ø_{b}, can be less than a diameter of the head portion 132 in order to inhibit the head portion 132 of the pin 120 from moving into the bore 572.

As illustrated in FIG. 5A, the second pin end 130 of the pin 120 was positioned in alignment with the bore 572 on the second side 576 of the structure 570 before being inserted through the bore 572. The fastening collar 102 has been positioned over the second pin end 130, and the second pin end 130 has been inserted into and through the collar cavity 110 of the fastening collar 102. The first collar end 104 of the fastening collar 102 has been positioned to contact the first layer 570a of the structure 570. For example, the fastening collar 102 can be in forcible contact with the structure 570, which can limit further axial movement of the fastening collar 102 relative to the pin 120 along the longitudinal axis of the multi-piece fastener 100. In various non-limiting embodiments in which the pin 120 and the fastening collar 102 comprise threads, inserting the second pin end 130 into the collar cavity 110 of the fastening collar 102 may require rotation of at least one of the fastening collar 102 and the pin 120.

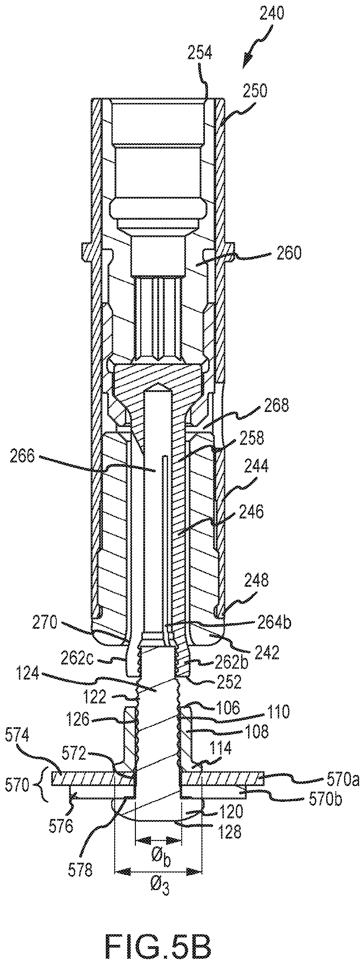

Referring to FIG. 5B, the collet 246 of the fastening collar installation apparatus 240 has engaged the shank 122 of the pin 120 of the multi-piece fastener 100. For example, the collet 246 was positioned over the pull region 124 of the multi-piece fastener 100 and retracted within the housing 244 of the fastening collar installation apparatus 240, which has caused the collet 246 to forcibly contact the anvil 242 of the fastening collar installation apparatus 240. Responsive to the contact between the anvil 242 and the collet 246, the jaws 256a-c have closed around the pull region 124 and have forcibly contacted the pull region 124 of pin 120. The forcible contact between the jaws 256a-c and the pull region 124 has mechanically deformed the pull region 124 to form an annular shoulder, a groove, a thread, and/or other feature on the pull region 124, thereby engaging the collet 246 with the pin 120.

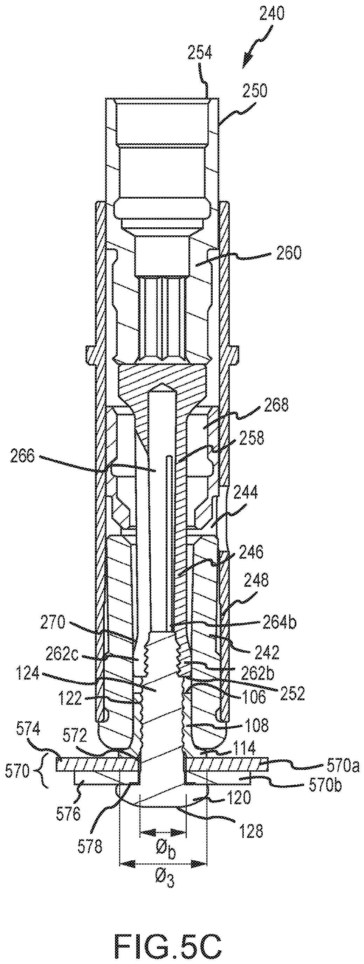

Upon engagement, the collet 246 can apply an axial force to the pull region 124 of the pin 120, which can decrease a gap, if present, between the first layer 570a and the second layer 570b of the structure 570 and create forcible contact between the fastening collar 102 and the structure 570. For example, referring to FIG. 5C, the collet 246 has further retracted within the fastening collar installation apparatus 240 and moved the pin 120 due to the engagement between the pull region 124 and the collet 246. As the collet 246 retracts within the housing 244 of the fastening collar installation apparatus 240, the anvil 242 can contact the fastening collar 102. After a predetermined force is achieved, the fastening collar 102 can be at least partially deformed responsive to the forcible contact between the anvil 242 and the fastening collar 102. For example, the fastening collar 102 can be swaged onto a generally smooth region, a threaded region, an annular shoulder, a groove, and/or other feature on a section of the shank 122 intermediate the first layer 570a and the second pin end 130. At least partially deforming the fastening collar 102 onto the shank 122 of the pin 120 can thereby secure the fastening collar 102 to the shank 122 and secure the multi-piece fastener 100 to at least a portion of the structure 570. In that way, for example, the first layer 570a and second layer 570b of the structure 570 are secured together (e.g., inhibited from axial movement along the longitudinal axis of the multi-piece fastener 100).

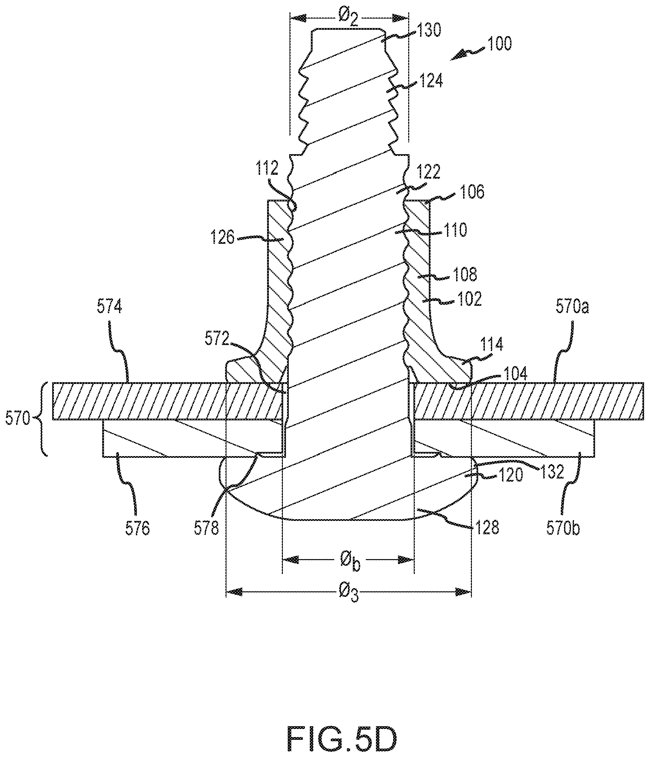

As illustrated in the non-limiting embodiment illustrated in FIG. 5D, after installation of the multi-piece fastener 100 into the structure 570, the fastening collar 102 and the head portion 132 of the pin 120 are applying a clamping force to the layers 570a-b of the structure 570, thereby securing the multi-piece fastener 100 to the structure 570 and securing layers 570a-b together. Additionally, an annular shoulder, a groove, a thread, and/or other feature has been formed on the pull region 124 of the pin 120 by the collet 246 of the fastening collar installation apparatus 240, thus providing a visual indication that the multi-piece fastener 100 has been installed. In various non-limiting embodiments, as illustrated in FIG. 5D, the pin 120 may not fracture after installation into the structure 570.

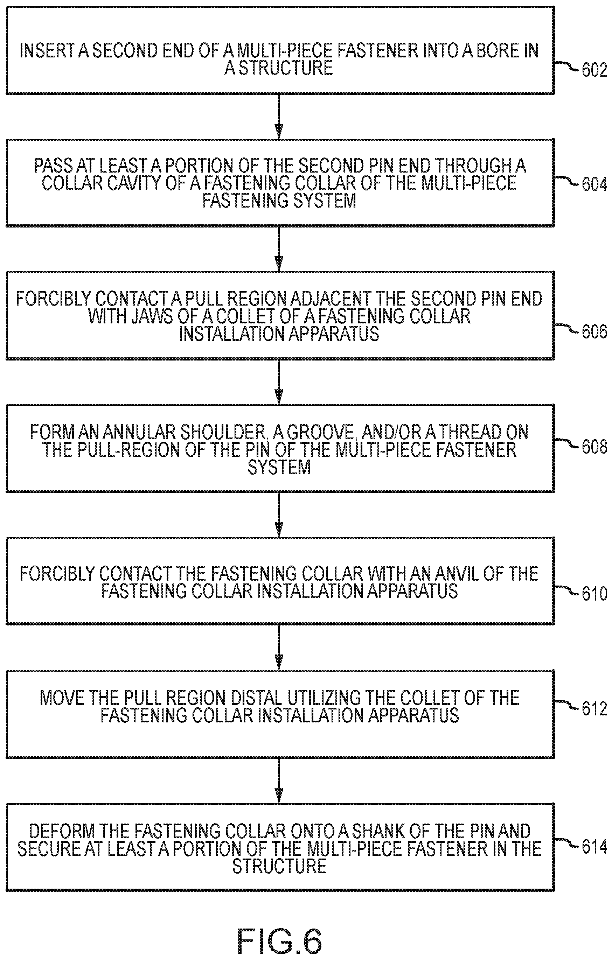

The present disclosure includes methods for installing a fastener and fastening a structure, as described and illustrated herein. In various non-limiting embodiments, referring to FIG. 6, the multi-piece fastener systems according to the present disclosure can be used in a method for fastening a structure. A second end of a multi-piece fastener according to the present disclosure can be inserted into a bore in a structure, 602. At least a portion of the second pin end can be passed through a collar cavity of a fastening collar of the multi-piece fastener according to the present disclosure, 604. The pull region of the pin can be forcibly contacted with jaws of a collet of a fastening collar installation apparatus according to the present disclosure, 606. An annular shoulder, a groove, a thread, and/or other feature can be formed on the pull region of the pin of the multi-piece fastener system according to the present disclosure by the jaws of the collet of the fastening collar installation apparatus according to the present disclosure, 608. For example, the jaws of the collet of the fastening collar installation apparatus according to the present disclosure can apply a force to a surface of the pull region that is greater than a yield strength of the pull region.

The fastening collar can be forcibly contacted with an anvil of the fastening collar installation apparatus, 610. The pull region can be moved distal from the fastening collar utilizing the collet of the fastening collar installation apparatus according to the present disclosure, 612. Thereby, the fastening collar installation apparatus deforms the fastening collar onto the shank of the pin and secures at least a portion of the multi-piece fastener according to the present disclosure in the structure, 614.

One skilled in the art will recognize that the herein described fasteners, structures, operations/actions, and objects, and the discussion accompanying them, are used as examples for the sake of conceptual clarity and that various configuration modifications within the scope of the appended claims are contemplated. Accordingly, the invention described herein should be understood to be at least as broad as claimed in the appended claims and not as more narrowly defined by particular illustrative aspects provided herein.

## Claims

1. A multi-piece fastener (100) comprising:
a fastening collar (102) comprising:
a first collar end (104); and
a second collar end (106),
wherein a collar cavity (110) extends from the first collar end to the second collar end; and
a pin (120) configured to be at least partially received by the collar cavity, the pin comprising
a first pin end (128) comprising a head portion (132);
a second pin end (130) comprising a pull region (124), wherein the pull region is generally cylindrical and smooth and is configured to form at least one of an annular shoulder, a groove, a thread, and other feature thereon responsive to forcible contact from a fastening collar installation apparatus (240); and
a shank (122) extending intermediate the first pin end and the second pin end, wherein the fastening collar is configured to be deformed onto the shank.

2. The multi-piece fastener (100) of claim 1, wherein the pull region (124) comprises an axial length (*l*) no greater than 4 times a diameter (ø₂) of the shank (122), and/or wherein a diameter (ø₂) of the shank is in a range of 1.52 mm to 102 mm (0.06 inches to 4 inches), preferably 1.52 mm to 25.4 mm (0.06 inches to 1 inch), more preferably 1.52 mm to 12.7 mm (0.06 inches to 0.5 inches).

3. The multi-piece fastener (100) of claim 1 or claim 2, wherein the shank (122) comprises at least one of an annular shoulder, a groove, a threaded region, and other feature, and/or wherein the pull region (124) is free of an annular shoulder, grooves, threads, and other feature prior to forcible contact from a fastening collar installation apparatus (240).

4. The multi-piece fastener (100) of any one of claims 1-3, wherein the fastening collar (102) is generally cylindrical, and/or wherein the fastening collar comprises a flange (114).

5. The multi-piece fastener (100) of any one of claims 1-4, wherein the multi-piece fastener is adapted to be installed in a bore (572) in a structure (570), the bore having a diameter (ø_{b}) less than a diameter of the head portion (132), preferably wherein the structure is configured as at least one of an aerospace part or component, an automotive part or component, a transportation part or component, and a building and construction part or component.

6. The multi-piece fastener (100) of any one of claims 1-5, wherein the multi-piece fastener comprises at least one of a metal, a metal alloy, and a composite.

7. A lockbolt comprising the multi-piece fastener (100) of any one of claims 1-6.

8. A fastening collar installation apparatus (240) comprising:
a housing (244) comprising
a first housing end (248); and
a second housing end (250),
wherein a housing cavity (268) extends from the first housing end to the second housing end;
an anvil (242) positioned within the housing cavity; and
a collet (246) positioned within the housing cavity, the collet comprising a first collet end (252) adjacent to the anvil, **characterised in that** the first collet end comprises jaws (256a-c, 356a-c, 456a-c) configured to forcibly contact at least a portion of a pull region (124) of a multi-piece fastener (100) and to form at least one of an annular shoulder, a groove, a thread, and other feature on the pull region.

9. The fastening collar installation apparatus (240) of claim 8, wherein the jaws (256a-c, 356a-c, 456a-c) of the collet (246) comprise at least one of an annular shoulder, a groove, a thread, and other feature.

10. The fastening collar installation apparatus (240) of claim 8 or claim 9, wherein the collet (246) is a single, continuous piece or multiple pieces, and/or
wherein the collet comprises:
a second collet end (254); and
an elongate portion (258) extending from the first collet end (252) to the second collet end, the elongate portion comprising at least two fingers (262a-c) formed by at least two axial channels (264a-c) in the elongate portion.

11. The fastening collar installation apparatus (240) of any one of claims 8-10,
wherein the multi-piece fastener (100) comprises:
a fastening collar (102) comprising
a first collar end (104); and
a second collar end (106),
wherein a collar cavity (110) extends from the first collar end to the second collar end; and
a pin (120) configured to be at least partially received by the collar cavity, the pin comprising
a first pin end (128) comprising a head portion (132);
a second pin end (130) comprising the pull region (124), wherein the pull region is generally cylindrical and smooth and is configured to form at least one of an annular shoulder, a groove, a thread, and other feature thereon responsive to forcible contact from the fastening collar installation apparatus; and
a shank (122) extending intermediate the first pin end and the second pin end, wherein the fastening collar is configured to be deformed onto the shank.

12. A method for fastening, the method comprising:
inserting a second pin end (130) of a multi-piece fastener (100) into a bore (572) in a structure (570), the multi-piece fastener comprising
a fastening collar (102) comprising
a first collar end (104); and
a second collar end (106),
wherein a collar cavity (110) extends from the first collar end to the second collar end, and
a pin (120) configured to be at least partially received by the collar cavity, the pin comprising
a first pin end (128) comprising a head portion (132);
the second pin end comprising a pull region (124), wherein the pull region is generally cylindrical and smooth; and
a shank (122) extending intermediate the first pin end and the second pin end;
passing at least a portion of the second pin end through the collar cavity;
forcibly contacting the pull region of the pin with jaws (256a-c, 356a-c, 456a-c) of a collet (246) of a fastening collar installation apparatus (240) and forming at least one of an annular shoulder, a groove, a thread, and other feature on the pull region; and
forcibly contacting the fastening collar with an anvil (242) of the fastening collar installation apparatus and moving the pull region distal from the fastening collar utilizing the collet of the fastening collar installation apparatus, thereby deforming the fastening collar onto the shank of the pin and securing at least a portion of the multi-piece fastener in the structure.

13. The method of claim 12, wherein the fastening collar installation apparatus (240) comprises:
a housing (244) comprising
a first housing end (248); and
a second housing end (250),
wherein a housing cavity (268) extends from the first housing end to the second housing end,
wherein the anvil (242) and the collet (246) are positioned within the housing cavity,
wherein the collet comprises a first collet end (252) adjacent to the anvil, the first collet end comprises the jaws (256a-c, 356a-c, 456a-c), and the collet is a single, continuous piece.

14. The method of claim 12 or claim 13, wherein the collet (246) comprises a first material with a first hardness, the pin (120) comprises a second material with a second hardness, and the first hardness is greater than the second hardness.

15. The method of any one of claims 12-14, wherein forcibly contacting the pull region (124) of the pin (120) with jaws (256a-c, 356a-c, 456a-c) of the collet (246) of the fastening collar installation apparatus (240) and forming at least one of an annular shoulder, a groove, a thread, and other feature on the pull region comprises applying a force with the jaws to a surface of the pull region that is greater than a yield strength of the pull region.

## Patentansprüche

1. Mehrteiliges Befestigungselement (100), umfassend:
einen Befestigungskragen (102), umfassend:
ein erstes Kragenende (104); und
ein zweites Kragenende (106),
wobei sich ein Kragenhohlraum (110) von dem ersten Kragenende zu dem zweiten Kragenende erstreckt; und
einen Stift (120), der so konfiguriert ist, dass er zumindest teilweise von dem Kragenhohlraum aufgenommen wird, wobei der Stift Folgendes umfasst:
ein erstes Stiftende (128), das einen Kopfabschnitt (132) umfasst;
ein zweites Stiftende (130), das einen Zugbereich (124) umfasst, wobei der Zugbereich im Allgemeinen zylindrisch und glatt ist und so konfiguriert ist, dass er in Reaktion auf einen erzwungenen Kontakt von einer Befestigungskragen-Installationsvorrichtung (240) zumindest eines aus einer ringförmigen Schulter, einer Nut, einem Gewinde und einem anderen Merkmal darauf bildet; und
einen Schaft (122), der sich zwischen dem ersten Stiftende und dem zweiten Stiftende erstreckt, wobei der Befestigungskragen so konfiguriert ist, dass er auf den Schaft verformt wird.

2. Mehrteiliges Befestigungselement (100) nach Anspruch 1, wobei der Zugbereich (124) eine axiale Länge (1) aufweist, die nicht größer als das 4-fache eines Durchmessers (ø₂) des Schafts (122) ist, und/oder wobei ein Durchmesser (ø₂) des Schafts in einem Bereich von 1,52 mm bis 102 mm (0,06 Zoll bis 4 Zoll), bevorzugt 1,52 mm bis 25,4 mm (0,06 Zoll bis 1 Zoll), besonders bevorzugt 1,52 mm bis 12,7 mm (0,06 Zoll bis 0,5 Zoll), liegt.

3. Mehrteiliges Befestigungselement (100) nach Anspruch 1 oder Anspruch 2, wobei der Schaft (122) zumindest eines aus einer ringförmigen Schulter, einer Nut, einem Gewindebereich oder einem anderen Merkmal umfasst und/oder wobei der Zugbereich (124) frei von einer ringförmigen Schulter, Nuten, Gewinden und einem anderen Merkmal ist, bevor ein erzwungener Kontakt von einer Befestigungskragen-Installationsvorrichtung (240) erfolgt.

4. Mehrteiliges Befestigungselement (100) nach einem der Ansprüche 1-3, wobei der Befestigungskragen (102) im Allgemeinen zylindrisch ist und/oder wobei der Befestigungskragen einen Flansch (114) umfasst.

5. Mehrteiliges Befestigungselement (100) nach einem der Ansprüche 1-4, wobei das mehrteilige Befestigungselement dazu ausgelegt ist, in einer Bohrung (572) in einer Struktur (570) installiert zu werden, wobei die Bohrung einen Durchmesser (ø_{b}) aufweist, der kleiner als ein Durchmesser des Kopfabschnitts (132) ist, wobei die Struktur bevorzugt als zumindest eines aus einem Luft- und Raumfahrtteil oder - bauteil, einem Kraftfahrzeugteil oder -bauteil, einem Transportteil oder -bauteil oder einem Bauvorrichtungsteil oder -bauteil konfiguriert ist

6. Mehrteiliges Befestigungselement (100) nach einem der Ansprüche 1-5, wobei das mehrteilige Befestigungselement zumindest eines aus einem Metall, einer Metalllegierung und einem Verbundwerkstoff umfasst.

7. Verriegelungsbolzen, der das mehrteilige
Befestigungselement (100) nach einem der Ansprüche 1-6 umfasst.

8. Befestigungskragen-Installationsvorrichtung (240), umfassend:
ein Gehäuse (244), umfassend:
ein erstes Gehäuseende (248); und
ein zweites Gehäuseende (250),
wobei sich ein Gehäusehohlraum (268) von dem ersten Gehäuseende zu dem zweiten Gehäuseende erstreckt;
einen Amboss (242), der innerhalb des Gehäusehohlraums positioniert ist; und
ein Spannfutter (246), das innerhalb des Gehäusehohlraums positioniert ist, wobei das Spannfutter ein erstes Spannfutterende (252) angrenzend an den Amboss umfasst, **dadurch gekennzeichnet, dass** das erste Spannfutterende Backen (256a-c, 356a-c, 456a-c) umfasst, die so konfiguriert sind, dass sie mit zumindest einem Abschnitt eines Zugbereichs (124) eines mehrteiligen Befestigungselements (100) erzwungen in Kontakt kommen und zumindest eines aus einer ringförmigen Schulter, einer Nut, einem Gewinde und einem anderen Merkmal an dem Zugbereich bilden.

9. Befestigungskragen-Installationsvorrichtung (240) nach Anspruch 8, wobei die Backen (256a-c, 356a-c, 456a-c) des Spannfutters (246) zumindest eines aus einer ringförmigen Schulter, einer Nut, einem Gewinde und einem anderen Merkmal umfassen.

10. Befestigungskragen-Installationsvorrichtung (240) nach Anspruch 8 oder Anspruch 9, wobei das Spannfutter (246) ein einzelnes, kontinuierliches Stück oder mehrere Stücke ist und/oder
wobei das Spannfutter Folgendes umfasst:
ein zweites Spannfutterende (254); und
einen länglichen Abschnitt (258), der sich von dem ersten Spannfutterende (252) zu dem zweiten Spannfutterende erstreckt, wobei der längliche Abschnitt zumindest zwei Finger (262a-c) umfasst, die durch zumindest zwei axiale Kanäle (264a-c) in dem länglichen Abschnitt gebildet sind.

11. Befestigungskragen-Installationsvorrichtung (240) nach einem der Ansprüche 8-10,
wobei das mehrteilige Befestigungselement (100) Folgendes umfasst:
einen Befestigungskragen (102), umfassend:
ein erstes Kragenende (104); und
ein zweites Kragenende (106),
wobei sich ein Kragenhohlraum (110) von dem ersten Kragenende zu dem zweiten Kragenende erstreckt; und
einen Stift (120), der so konfiguriert ist, dass er zumindest teilweise von dem Kragenhohlraum aufgenommen wird, wobei der Stift Folgendes umfasst:
ein erstes Stiftende (128), das einen Kopfabschnitt (132) umfasst;
ein zweites Stiftende (130), das den Zugbereich (124) umfasst, wobei der Zugbereich im Allgemeinen zylindrisch und glatt ist und so konfiguriert ist, dass er in Reaktion auf einen erzwungenen Kontakt von der Befestigungskragen-Installationsvorrichtung zumindest eines aus einer ringförmigen Schulter, einer Nut, einem Gewinde und einem anderen Merkmal darauf bildet; und
einen Schaft (122), der sich zwischen dem ersten Stiftende und dem zweiten Stiftende erstreckt, wobei der Befestigungskragen so konfiguriert ist, dass er auf den Schaft verformt wird.

12. Verfahren zur Befestigung, wobei das Verfahren Folgendes umfasst:
Einführen eines zweiten Stiftendes (130) eines mehrteiligen Befestigungselements (100) in eine Bohrung (572) in einer Struktur (570), wobei das mehrteilige Befestigungselement Folgendes umfasst:
einen Befestigungskragen (102), umfassend:
ein erstes Kragenende (104); und
ein zweites Kragenende (106),
wobei sich ein Kragenhohlraum (110) von dem ersten Kragenende zu dem zweiten Kragenende erstreckt; und
einen Stift (120), der so konfiguriert ist, dass er zumindest teilweise von dem Kragenhohlraum aufgenommen wird, wobei der Stift Folgendes umfasst:
ein erstes Stiftende (128), das einen Kopfabschnitt (132) umfasst;
das zweite Stiftende, das einen Zugbereich (124) umfasst, wobei der Zugbereich im Allgemeinen zylindrisch und glatt ist; und
einen Schaft (122), der sich zwischen dem ersten Stiftende und dem zweiten Stiftende erstreckt;
Führen zumindest eines Teils des zweiten Stiftendes durch den Kragenhohlraum;
erzwungene Kontaktierung des Zugbereichs des Stifts mit Backen (256a-c, 356a-c, 456a-c) eines Spannfutters (246) einer Befestigungskragen-Installationsvorrichtung (240) und Bilden zumindest eines aus einer ringförmigen Schulter, einer Nut, einem Gewinde und einem anderen Merkmal auf dem Zugbereich; und
erzwungene Kontaktierung des Befestigungskragens mit einem Amboss (242) der Befestigungskragen-Installationsvorrichtung und Bewegen des Zugbereichs in eine distale Richtung von dem Befestigungskragen mittels des Spannfutters der Befestigungskragen-Installationsvorrichtung, wodurch der Befestigungskragen auf den Schaft des Stiftes verformt und zumindest ein Abschnitt des mehrteiligen Befestigungselements in der Struktur befestigt wird.

13. Verfahren nach Anspruch 12, wobei die Befestigungskragen-Installationsvorrichtung (240) Folgendes umfasst:
ein Gehäuse (244), umfassend:
ein erstes Gehäuseende (248); und
ein zweites Gehäuseende (250),
wobei sich ein Gehäusehohlraum (268) von dem ersten Gehäuseende zu dem zweiten Gehäuseende erstreckt,
wobei der Amboss (242) und das Spannfutter (246) innerhalb des Gehäusehohlraums positioniert sind,
wobei das Spannfutter ein erstes Spannfutterende (252) angrenzend an den Amboss umfasst, das erste Spannfutterende die Backen (256a-c, 356a-c, 456a-c) umfasst und das Spannfutter ein einzelnes durchgehendes Stück ist.

14. Verfahren nach Anspruch 12 oder Anspruch 13, wobei das Spannfutter (246) ein erstes Material mit einer ersten Härte aufweist, der Stift (120) ein zweites Material mit einer zweiten Härte aufweist und die erste Härte größer als die zweite Härte ist.

15. Verfahren nach einem der Ansprüche 12-14, wobei das erzwungene Kontaktieren des Zugbereichs (124) des Stifts (120) mit Backen (256a-c, 356a-c, 456a-c) des Spannfutters (246) der Befestigungskragen-Installationsvorrichtung (240) und das Bilden zumindest eines aus einer ringförmigen Schulter, einer Nut, eines Gewindes und eines anderen Merkmals an dem Zugbereich die Anwendung einer Kraft auf eine Oberfläche des Zugbereichs mithilfe der Backen umfasst, die größer ist als eine Streckgrenze des Zugbereichs.

## Revendications

1. Élément de fixation en plusieurs pièces (100) comprenant :
un collier de fixation (102) comprenant :
une première extrémité de collier (104) ; et
une seconde extrémité de collier (106),
dans lequel une cavité de collier (110) s'étend de la première extrémité de collier à la seconde extrémité de collier ; et
une broche (120) configurée pour être au moins partiellement reçue par la cavité du collier, la broche comprenant
une première extrémité de broche (128) comprenant une partie de tête (132) ;
une seconde extrémité de broche (130) comprenant une région de traction (124), dans laquelle la région de traction est généralement cylindrique et lisse et est configurée pour former au moins un parmi un épaulement annulaire, une rainure, un filetage, et une autre caractéristique sur celle-ci en réponse à un contact forcé provenant d'un appareil d'installation de collier de fixation (240) ; et
une tige (122) s'étendant entre la première extrémité de broche et la seconde extrémité de broche, dans laquelle le collier de fixation est configuré pour être déformé sur la tige.

2. Élément de fixation en plusieurs pièces (100) selon la revendication 1, dans lequel la région de traction (124) comprend une longueur axiale (1) non supérieure à 4 fois un diamètre (ø₂) de la tige (122), et/ou dans lequel un diamètre (ø₂) de la tige est dans une plage de 1,52 mm à 102 mm (0,06 pouce à 4 pouces), de préférence de 1,52 mm à 25,4 mm (0,06 pouce à 1 pouce), plus préférablement de 1,52 mm à 12,7 pouces (0,06 pouce à 0,5 pouce).

3. Élément de fixation en plusieurs pièces (100) selon la revendication 1 ou la revendication 2, dans lequel la tige (122) comprend au moins un parmi un épaulement annulaire, une rainure, une région filetée et une autre caractéristique, et/ou dans lequel la région de traction (124) est exempte d'épaulement annulaire, de rainures, de filetages et d'autres caractéristiques avant le contact forcé d'un appareil d'installation de collier de fixation (240).

4. Élément de fixation en plusieurs pièces (100) selon l'une quelconque des revendications 1 à 3, dans lequel le collier de fixation (102) est généralement cylindrique, et/ou dans lequel le collier de fixation comprend une bride (114).

5. Élément de fixation en plusieurs pièces (100) selon l'une quelconque des revendications 1 à 4, dans lequel l'élément de fixation en plusieurs pièces est adapté pour être installé dans un alésage (572) dans une structure (570), l'alésage ayant un diamètre (ø_{b}) inférieur à un diamètre de la partie de tête (132), de préférence dans lequel la structure est configurée comme au moins un d'une partie ou d'un composant aérospatial, d'une partie ou d'un composant automobile, d'une partie ou d'un composant de transport, et d'une partie ou d'un composant de bâtiment et de construction

6. Élément de fixation en plusieurs pièces (100) selon l'une quelconque des revendications 1 à 5, dans lequel l'élément de fixation en plusieurs pièces comprend au moins un parmi un métal, un alliage métallique et un composite.

7. Boulon de verrouillage comprenant l'élément de fixation en plusieurs pièces (100) selon l'une quelconque des revendications 1 à 6.

8. Appareil d'installation de collier de fixation (240) comprenant :
un logement (244) comprenant
une première extrémité de logement (248) ; et
une seconde extrémité de logement (250),
dans lequel une cavité de logement (268) s'étend de la première extrémité de logement à la seconde extrémité de logement ;
un étrier (242) positionné à l'intérieur de la cavité de logement ; et
une pince de serrage (246) positionnée à l'intérieur de la cavité de logement, la pince de serrage comprenant une première extrémité de pince de serrage (252) adjacente à l'étrier, **caractérisée en ce que** la première extrémité de pince de serrage comprend des mâchoires (256a-c, 356a-c, 456a-c) configurées pour venir en contact forcé avec au moins une partie d'une région de traction (124) d'un élément de fixation en plusieurs pièces (100) et pour former au moins un parmi un épaulement annulaire, une rainure, un filetage et une autre caractéristique sur la région de traction.

9. Appareil d'installation de collier de fixation (240) selon la revendication 8, dans lequel les mâchoires (256a-c, 356a-c, 456a-c) de la pince de serrage (246) comprennent au moins un parmi un épaulement annulaire, une rainure, un filetage et une autre caractéristique.

10. Appareil d'installation de collier de fixation (240) selon la revendication 8 ou la revendication 9, dans lequel la pince de serrage (246) est une pièce unique continue ou plusieurs pièces, et/ou
dans lequel la pince de serrage comprend :
une seconde extrémité de pince de serrage (254) ; et
une partie allongée (258) s'étendant de la première extrémité de pince de serrage (252) à la seconde extrémité de pince de serrage, la partie allongée comprenant au moins deux doigts (262a-c) formés par au moins deux canaux axiaux (264a-c) dans la partie allongée.

11. Appareil d'installation de collier de fixation (240) selon l'une quelconque des revendications 8 à 10, dans lequel l'élément de fixation en plusieurs pièces (100) comprend :
un collier de fixation (102) comprenant
une première extrémité de collier (104) ; et
une seconde extrémité de collier (106),
dans lequel une cavité de collier (110) s'étend de la première extrémité de collier à la seconde extrémité de collier ; et
une broche (120) configurée pour être au moins partiellement reçue par la cavité du collier, la broche comprenant
une première extrémité de broche (128) comprenant une partie de tête (132) ;
une seconde extrémité de broche (130) comprenant la région de traction (124), dans laquelle la région de traction est généralement cylindrique et lisse et est configurée pour former au moins un parmi un épaulement annulaire, une rainure, un filetage et une autre caractéristique sur celle-ci en réponse à un contact forcé de l'appareil d'installation de collier de fixation ; et
une tige (122) s'étendant entre la première extrémité de broche et la seconde extrémité de broche, dans laquelle le collier de fixation est configuré pour être déformé sur la tige.

12. Procédé de fixation, le procédé comprenant :
l'insertion d'une seconde extrémité de broche (130) d'un élément de fixation en plusieurs pièces (100) dans un alésage (572) dans une structure (570), l'élément de fixation en plusieurs pièces comprenant
un collier de fixation (102) comprenant
une première extrémité de collier (104) ; et
une seconde extrémité de collier (106),
dans lequel une cavité de collier (110) s'étend de la première extrémité de collier à la seconde extrémité de collier, et
une broche (120) configurée pour être au moins partiellement reçue par la cavité du collier, la broche comprenant
une première extrémité de broche (128) comprenant une partie de tête (132) ;
la seconde extrémité de broche comprenant une région de traction (124), dans laquelle la région de traction est généralement cylindrique et lisse ; et
une tige (122) s'étendant entre la première extrémité de broche et la seconde extrémité de broche ;
le passage d'au moins une partie de la seconde extrémité de broche à travers la cavité de collier ;
le contact forcé de la région de traction de la broche avec des mâchoires (256a-c, 356a-c, 456a-c) d'une pince de serrage (246) d'un appareil d'installation de collier de fixation (240) et la formation d'au moins un parmi un épaulement annulaire, une rainure, un filetage et une autre caractéristique sur la région de traction ; et
le contact forcé du collier de fixation avec un étrier (242) de l'appareil d'installation de collier de fixation et le déplacement de la région de traction distale par rapport au collier de fixation à l'aide de la pince de serrage de l'appareil d'installation de collier de fixation, déformant ainsi le collier de fixation sur la tige de la broche et fixant au moins une partie de l'élément de fixation en plusieurs pièces dans la structure.

13. Procédé selon la revendication 12, dans lequel l'appareil d'installation de collier de fixation (240) comprend :
un logement (244) comprenant
une première extrémité de logement (248) ; et
une seconde extrémité de logement (250),
dans lequel une cavité de logement (268) s'étend de la première extrémité de logement jusqu'à la seconde extrémité de logement,
dans lequel l'étrier (242) et la pince de serrage (246) sont positionnés à l'intérieur de la cavité de logement,
dans lequel la pince de serrage comprend une première extrémité de pince de serrage (252) adjacente à l'étrier, la première extrémité de pince de serrage comprend les mâchoires (256a-c, 356a-c, 456a-c), et la pince de serrage est une pièce unique continue.

14. Procédé selon la revendication 12 ou la revendication 13, dans lequel la pince de serrage (246) comprend un premier matériau ayant une première dureté, la broche (120) comprend un second matériau ayant une seconde dureté, et la première dureté est supérieure à la seconde dureté.

15. Procédé selon l'une quelconque des revendications 12 à 14, dans lequel la mise en contact forcée de la région de traction (124) de la broche (120) avec des mâchoires (256a-c, 356a-c, 456a-c) de la pince de serrage (246) de l'appareil d'installation de collier de fixation (240) et la formation d'au moins un parmi un épaulement annulaire, une rainure, un filetage et une autre caractéristique sur la région de traction comprend l'application d'une force avec les mâchoires sur une surface de la région de traction qui est supérieure à une force de déformation de la région de traction.
